(19) Europäisches Patentamt / European Patent Office / Office européen des brevets

(11) **EP 4 416 485 B1**

(12) **EUROPEAN PATENT SPECIFICATION**

(45) Date of publication and mention
of the grant of the patent:
**16.07.2025 Bulletin 2025/29**

(21) Application number: **22801766.1**

(22) Date of filing: **11.10.2022**

(51) International Patent Classification (IPC):
***G01N 17/04*** *(2006.01)*      ***G01N 27/48*** *(2006.01)*

(52) Cooperative Patent Classification (CPC):
**G01N 17/04; G01N 27/48;** G01N 17/006

(86) International application number:
**PCT/EP2022/078277**

(87) International publication number:
**WO 2023/062022 (20.04.2023 Gazette 2023/16)**

(54) **CORROSION MONITORING METHOD**

KORROSIONSÜBERWACHUNGSVERFAHREN

PROCÉDÉ DE SURVEILLANCE DE LA CORROSION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **13.10.2021 EP 21202500**

(43) Date of publication of application:
**21.08.2024 Bulletin 2024/34**

(73) Proprietor: **CASALE SA
6900 Lugano (CH)**

(72) Inventors:
• **MARRONE, Leonardo
21020 Mercallo (VA) (IT)**
• **ORMELLESE, Marco
22060 Figino Serenza (CO) (IT)**
• **BERETTA, Silvia
20133 Milano (IT)**

(74) Representative: **M. Zardi & Co S.A.
Via G. B. Pioda, 6
6900 Lugano (CH)**

(56) References cited:
**WO-A1-2021/006729      US-A1- 2016 075 642**

## Description

Field of application

The invention is in the field of urea production. The invention particularly pertains to a method for measuring in continuous the corrosion rate in urea plants.

Prior art

In chemical plants, corrosion in general term can be seen as the deterioration of a metal or alloy as a result of the interaction with its environment.

Urea plants are particularly subjected to corrosion phenomena due to the high temperature operating conditions of the plants and due to formation during the synthesis process of a highly corrosive aqueous solution of ammonium carbamate.

In urea plants, the apparatus subjected to the most aggressive environment are the urea synthesis reactor, the urea stripper and the urea condenser. Such apparatus must be manufactured with corrosion-resistant alloys to be able to withstand corrosion.

Austenitic Stainless Steel (SS) is a Fe-Cr-Ni corrosion-resistant alloy typically used as a structural material in said plants. Unfortunately, the effectiveness of this alloy against corrosion is not absolute. For instance, when SS is exposed to an aqueous solution of ammonium carbamate that retains a too low concentration of dissolved oxygen, corrosion can occur quite rapidly (up to 50 mm/y).

In practical application, to reduce the corrosion rate of SS to an acceptable value, e.g. lower than 1 mm/year, oxygen must be continuously injected into the urea synthesis loop and dissolved into the liquid phase to ensure the continuous passivation of the alloy. During passivation, a protective oxide layer is built on the surface of the alloy and the corrosion rate is reduced to a value typically lower than 0.15 mm/year.

Unfortunately, the continuous injection of oxygen in the urea synthesis loop may not be sufficient to prevent corrosion in every operating condition experienced by the plant over time. For instance, the corrosive nature of the process fluid can be enhanced by the presence of contaminants such as chlorides or sulphides, or by the occurrence of transient variations in temperature or in chemical composition.

Additionally, a low dissolution of oxygen in the liquid phase due to not adequate mixing of latter within the process gas or a not sufficient liquid-gas contacting time can drastically increase the corrosion (up to 50 mm/year) possibly leading to severe consequences e.g. the failure of components.

Therefore, in practical application corrosion monitoring techniques must be applied to verify if the corrosion rate is within an unacceptable range.

Corrosion measurements are normally performed at the periodic plant turnarounds. Techniques as eddy current, ultrasonic testing or equivalent are used to check a reduction in cross-section area or a thinning over time of the plant's components exposed to the most demanding conditions.

Unfortunately, the above mentioned techniques are not completely satisfactory to monitor corrosion because only an average corrosion rate value over a relatively long period of time can be measured. Localized spikes in corrosion rate cannot be detected and only a very limited number of corrosion data can be generated.

Alternative corrosion monitoring methods are based on ultrasonic techniques that unfortunately are not particularly attractive due to the poor detection resolution of the instruments. Furthermore, the ultrasonic methods only allow the determination of an average corrosion rate value over a relatively long period of time and again, localized spikes in corrosion rate cannot be detected.

A further disadvantage is that the ultrasonic methods can only be applied on pipes and not directly onto pressure vessels such as the urea reactor or the stripper due to technical limitations.

It is therefore highly desirable to find an alternative and more efficient method to measure the corrosion rate in urea plants. Ideally, when applied the new method should generate corrosion rate data in a very short time, should be able to detect spikes in corrosion rate and should be easy applicable both on pipes and on reactor vessels. US 2016/075642 A1 describes determining a corrosion rate in an autoclave for synthesising urea using a working, a counter and a reference electrode, wherein a polarisation resistance method is used and a current is measured.

Summary of the invention

The invention is based on the judicious insight that the corrosion in a urea plant is an electrochemical corrosion process that occurs in a liquid phase which brings to almost uniform thickness loss on the surface of the metal exposed to the corrosive environment (general or uniform corrosion).

The corrosion environment due to the presence of ions or salts dissolved into the aqueous electrolyte is highly electrically conductive. That is a prerequisite for the application of the present method.

The present invention aims to provide a method to measure in continuous the corrosion rate in urea plants. Accordingly, one aspect of the present invention is a method for determining the corrosion rate of a piece of equipment of a urea synthesis plant, said piece of equipment is immersed within a process fluid of said urea synthesis plant, which is an aqueous solution containing ammonium carbamate.

The method comprises the provision of electrodes immersed in said process fluid, said electrodes including at least a working electrode which is made of the same material as said piece of equipment, a reference electrode and a counter electrode.

The method comprises the steps of determining polarization data of the working electrode, by varying the electrochemical potential of said working electrode with respect the reference electrode, and determining a corrosion rate of said piece of equipment based on said polarization data, wherein said electrodes are put in contact with said process fluid by installing said electrodes in a pressure vessel of said piece of equipment, or by withdrawing a portion of said process fluid from a line upstream or downstream said piece of equipment and sending said portion of said process fluid to a probe including the electrodes.

Advantageously, the method of the present invention allows to acquired multiple measures of corrosion rate in a very short period of time. Typically, a corrosion rate measurement can be acquired in order of minutes.

Even more advantageously, the method does not require the inspection or the extraction of the electrodes from the apparatus i.e. from a chemical vessel or a pipe to measure the corrosion rate but the latter can be acquired remotely and the steps required to perform the measurement can be fully automated in a control-logic.

Additionally, due to the short time frame required to acquire the polarization data, spikes in corrosion rate can be easily detected and a large set of corrosion data can be generated. The method is as well directly applicable in the determination of corrosion rate both on pipes and on reactor vessels.

Detailed description of the invention

The invention comprises the provision of an electrochemical probe comprising a plurality of electrodes that must be immersed in the corrosive solution. The electrodes are connected by means of electrical cables to a potentiostat or to an equivalent electronic device and preferably, said cables are made of a material or alloy characterized by a low internal resistance to the passage of the electrical current.

The potentiostat or any other suitable electronic device can be used to apply a current between two or more electrodes and to measure the established potential across them. Alternatively, the potentiostat can be used to impose a potential between two or more electrodes and to measure the electrical current flowing across them. Preferably, the electronic device can operate either in a potentiodynamic or in a galvanostatic mode.

According to the invention, the electrochemical probe comprises three electrodes namely a working electrode WE, a counter electrode CE and a reference electrode RE. Ideally, no current flows through the reference electrode during the acquisition of the polarisation data.

According to a particularly preferred embodiment, the polarization data are obtained by sweeping the electrochemical potential of said WE with respect to the RE and by measuring the current flowing between the WE and the CE. Hereinafter for simplicity the electrochemical potential difference between the WE and RE is indicated as E, and shortly referred-to as the electrochemical potential.

Preferably, the electrochemical potential of said WE relative to the RE is swept around the Open Circuit Potential (OCP) wherein the OCP is defined as the potential difference between the WE and the RE measured in absence of an electric current circulating between the WE and the CE. In practical applications, if the WE and RE are made of the same material the OCP is by definition very close to 0 mV.

$\Delta E$ is the imposed potential difference at the WE with respect to the RE, defined as:

$$\Delta E = E - OCP$$

According to a particularly preferred embodiment, the electrochemical potential is swept in a range between -20 mV and +20 mV versus said OCP. More preferably between -10 mV and +10 mV versus said OCP.

The scan rate parameter that defines the potential scan rate during data acquisition is preferably lower than 20 mV / min or more preferably lower than 10 mV / min.

When the electrochemical potential of the WE, i.e. E, is varied in a small range in proximity of OCP, a polarization resistance $R_P$ of the specimen forming the working electrode during the application of an external polarization can be calculated from the polarization data as follow:

$$R_P = \frac{\Delta E}{I}$$

$\Delta E$ is the imposed potential difference at the working electrode and $I$ is the current flowing between the WE and the CE measured in the said $\Delta E$ potential difference. Preferably, $R_p$ is determined in the anodic part of the said polarization. More preferably Rp is calculated at $\Delta E = +10 mV$.

Preferably, the determination of the corrosion data includes the steps of:

- determining a parameter B on the basis of the material of the working electrode and the composition of the process fluid wherein the electrodes are immersed.

- determining a corrosion current $I_{corr}$ by dividing the said parameter B by the polarisation resistance $R_p$ value as follow:

$$I_{corr} = \frac{B}{R_p}$$

- finally determining the corrosion rate $C_{rate}$ according

to the following equation:

$$C_{rate} = \frac{I_{corr}}{A} * K$$

wherein A is the surface area of the working electrode exposed to the process fluid and K is a conversion factor.

K is a conversion factor that converts the density of current (ampere / surface, for example $A/cm^2$) into velocity of corrosion, such as mm/year. Said conversion factor K can be calculated in accordance with the standard ASTM G 102-89 "Standard Practice for Calculation of Corrosion Rates and Related Information from Electrochemical Measurements". Particularly preferably the factor K is calculated according to par. 4.4 and Appendix X2 of said ASTM standard.

Based on experiments performed by the applicant, K is preferably comprised between 9'000 and 11'000 mm/y $cm^2$/A. For AISI 316 steel the factor K is preferably in the range 10'600 - 10'700, more preferably around 10'680 mm/y $cm^2$/A. For AISI 304 the factor K is slightly less, preferably 10'500 to 10'600, typically around 10'520 mm/y $cm^2$/A. For a super duplex steel, suitable for use in urea equipment, the factor K is typically 9'900 to 10'000 mm/y $cm^2$/A, preferably around 9'980 mm/y $cm^2$/A. For example K is around 9'985 mm/y $cm^2$/A for the steel known commercially as Uremium 29.

According to a particularly preferred embodiment, the working electrode is made of a super duplex stainless steel (austenitic-ferritic) and when it is immersed into an aqueous solution of ammonium carbamate and no passivating oxygen is injected into the solution, B can be selected in the range 3.0 to 6.0 mV, or preferably 3.5 to 5.0 mV or more preferably 4.7 mV, or around 4.7 mV.

The applicant found that when austenitic stainless steel (AISI 316L) is exposed to a deaerated solution of ammonium carbamate under urea synthesis conditions, B is comprised in the range 25 to 15 mV or preferably 20 to 17 mV or even more preferably close or equal to 18 mV.

Alternatively, B can also be calculated from the following equation:

$$B = \frac{b_a * b_c}{2.3 * (b_a + b_c)}$$

where the parameters $b_a$ and $b_c$ are respectively the anodic and cathodic Tafel slopes. Preferably those slopes are estimated by fitting the Butler-Volmer equation (displayed below) on the polarization data ($\Delta E$ vs I) acquired experimentally. Preferably, those data are collected within the range - 50 mV ÷ + 50 mV and more preferably between - 10 mV ÷ + 10 mV.

$$I = I_{corr}(10^{\frac{\Delta E}{ba}} - 10^{\frac{\Delta E}{bc}})$$

Regression techniques can also be applied to determine said paraments. Advantageously, the above-mentioned procedure to determine B is simplified in an aerated environment because the parameter $b_a \to \infty$, consequently the Butler-Volmer equation can be simplified as follow:

$$I = I_{corr}(-10^{\frac{\Delta E}{bc}})$$

Fitting and regression techniques can still be applied to determinate the parameters $I_{corr}$ and $b_c$.

According to the invention the WE is made of the same material of the piece of equipment immersed in the process fluid where the corrosion rate need to be measured and according to a particularly preferred embodiment, the reference electrode and the counter electrode are made of the same material of the WE. The method of the present invention is particularly suited to determine the corrosion rate of a piece of equipment being part of a high-pressure urea synthesis section or urea synthesis loop, particularly a urea synthesis reactor, a urea stripper, a urea condenser or a piece thereof.

According to the invention, a portion of the electrochemical probe that retains the electrodes is immersed in the process fluid by installing the probe in a pressure vessel or by withdrawing a portion of said process fluid from the pressure vessels or from a specific location of the pressure vessels in contact with a piece of equipment and sending said portion of process fluid to the electrodes.

The method of the invention can be performed continuously so that a large set of corrosion rate data can be acquired and spike in corrosion rate can also be detected.

Preferably, the electrodes are concentrically arranged on the electrochemical probe to prevent or limit the occurrence of current spread effect that may cause a displacement in potential of the electrodes.

A suitable electrochemical probe for carrying out the method of the invention is the PAIR™ probe from Alabama Specialty Products, Inc.

**Claims**

1. Method for determining the corrosion rate of a piece of equipment of a urea synthesis plant, said piece of equipment being in contact with a process fluid of said urea synthesis plant, which is an aqueous solution containing ammonium carbamate, wherein the method comprises the provision of electrodes immersed in said process fluid, said electrodes including at least a working electrode which is made of the same material as said piece of equipment, a reference electrode and a counter electrode, the method comprising the steps of:

a) determining polarization data of the working electrode, by varying the electrochemical potential of said working electrode relative to the reference electrode, and
b) determining a corrosion rate of said piece of equipment based on said polarization data;

wherein said electrodes are put in contact with said process fluid by installing said electrodes in a pressure vessel of said piece of equipment, or by withdrawing a portion of said process fluid from a line upstream or downstream said piece of equipment and sending said portion of said process fluid to a probe including the electrodes.

2. Method according to claim 1, wherein said step a) includes to sweep the electrochemical potential of said working electrode relative to the reference electrode and to measure the current flowing between the working electrode and the counter electrode.

3. Method according to claim 2, wherein in the step a) the electrochemical potential of said working electrode relative to the reference electrode is swept around the open circuit potential, said open circuit potential being the potential difference between the working electrode and the reference electrode measured in absence of an electric current circulating between the working electrode and the counter electrode.

4. Method according to claim 3, wherein said electrochemical potential is swept in a range between -20 mV and +20 mV versus said open circuit potential.

5. Method according to claim 4, wherein said electrochemical potential is swept with a scan rate lower than 20 mV / min, preferably lower than 10 mV / min.

6. Method according to any previous claims, wherein from the polarization data a polarization resistance $R_P$ is calculated as follow:

$$R_P = \frac{\Delta E}{I}$$

wherein:

$\Delta E$ is the imposed potential difference at the working electrode calculated as $\Delta E = E - OCP$ wherein E is the electrochemical potential of the working electrode and OCP is the open circuit potential;
I is the current flowing between the working electrode and the counter electrode in said $\Delta E$.

7. Method according to claim 6, wherein the step b) includes the following steps:

• determining a parameter B on the basis of the material of the working electrode and the composition of the process fluid;
• determining a corrosion current $I_{corr}$ as follow:

$$I_{corr} = \frac{B}{R_p}$$

• determining the corrosion rate $C_{rate}$ as follow:

$$C_{rate} = \frac{I_{corr}}{A} * K$$

wherein A is the surface area of the working electrode exposed to the process fluid and K is a conversion factor, wherein K is determined in accordance with ASTM G102-89;
wherein said parameter B is defined as follows:

B is in the range 3.0 to 6.0 mV when the working electrode is made of a super duplex stainless steel (austenitic-ferritic) and when it is immersed into an aqueous solution of ammonium carbamate and no passivating oxygen is injected into the solution, or
B is calculated from the following equation:

$$B = \frac{b_a * b_c}{2.3 * (b_a + b_c)}$$

where the parameters $b_a$ is the anodic Tafel slope and $b_c$ is the cathodic Tafel slope.

8. Method according to claim 7, wherein the working electrode is made of a super duplex stainless steel and is exposed to the process fluid not added with passivating oxygen, and B is in the range 3.5 to 5.0 mV and preferably 4.7 mV or around 4.7 mV.

9. Method according to any of the previous claims, wherein the working electrode, the reference electrode, and the counter electrode, are made of the same material.

10. Method according to any of the previous claims, wherein said piece of equipment is part of a high-pressure urea synthesis section or urea synthesis loop, particularly a urea synthesis reactor, a urea stripper, a urea condenser or a piece thereof.

**11.** Method according to any of the previous claims, wherein said working electrode, said reference electrode and said counter electrode are concentrically arranged on said probe.

**12.** Method according to any of the previous claims, wherein the method is performed continuously.

**Patentansprüche**

**1.** Verfahren zur Bestimmung der Korrosionsrate eines Teils einer Harnstoffsyntheseanlage, wobei das Teil mit einer Prozessflüssigkeit der Harnstoffsyntheseanlage in Kontakt steht, die eine wässrige Lösung ist, die Ammoniumcarbamat enthält, wobei das Verfahren die Bereitstellung von Elektroden umfasst, die in die Prozessflüssigkeit eingetaucht sind, wobei die Elektroden mindestens eine Arbeitselektrode, die aus dem gleichen Material wie das Teil besteht, eine Referenzelektrode und eine Gegenelektrode umfassen, wobei das Verfahren die folgenden Schritte umfasst:

a) Bestimmung von Polarisationsdaten der Arbeitselektrode durch Variieren des elektrochemischen Potentials der Arbeitselektrode relativ zur Referenzelektrode, und
b) Bestimmung einer Korrosionsrate des Geräts auf der Grundlage der Polarisationsdaten;

wobei die Elektroden mit der Prozessflüssigkeit in Kontakt gebracht werden, indem die Elektroden in einem Druckbehälter des Geräts installiert werden oder indem ein Teil der Prozessflüssigkeit aus einer Leitung stromaufwärts oder stromabwärts des Geräts entnommen und dieser Teil der Prozessflüssigkeit zu einer Sonde geleitet wird, die die Elektroden enthält.

**2.** Verfahren nach Anspruch 1, wobei der Schritt a) umfasst, das elektrochemische Potential der Arbeitselektrode relativ zur Referenzelektrode zu durchlaufen und den zwischen der Arbeitselektrode und der Gegenelektrode fließenden Strom zu messen.

**3.** Verfahren nach Anspruch 2, wobei in Schritt a) das elektrochemische Potential der Arbeitselektrode relativ zur Referenzelektrode um das Potential des offenen Stromkreises herum durchlaufen wird, wobei das Potential des offenen Stromkreises die Potentialdifferenz zwischen der Arbeitselektrode und der Referenzelektrode ist, gemessen in Abwesenheit eines zwischen der Arbeitselektrode und der Gegenelektrode fließenden elektrischen Stroms.

**4.** Verfahren nach Anspruch 3, wobei das elektroche

mische Potential in einem Bereich zwischen -20 mV und +20 mV gegenüber dem Potential des offenen Stromkreises durchlaufen wird.

**5.** Verfahren nach Anspruch 4, wobei das elektrochemische Potential mit einer Scanrate von weniger als 20 mV/min, vorzugsweise weniger als 10 mV/min, durchlaufen wird.

**6.** Verfahren nach einem der vorhergehenden Ansprüche, wobei aus den Polarisationsdaten ein Polarisationswiderstand $R_P$ wie folgt berechnet wird:

$$R_P = \frac{\Delta E}{I}$$

wobei:

$\Delta E$ die an der Arbeitselektrode angelegte Potentialdifferenz ist, berechnet als
$\Delta E = E - OCP$ wobei E das elektrochemische Potential der Arbeitselektrode und $OCP$ das Potential des offenen Stromkreises ist;
$I$ ist der Strom, der zwischen der Arbeitselektrode und der Gegenelektrode in $\Delta E$ fließt.

**7.** Verfahren nach Anspruch 6, wobei der Schritt b) die folgenden Schritte umfasst:

• Bestimmung eines Parameters $B$ auf der Grundlage des Materials der Arbeitselektrode und der Zusammensetzung der Prozessflüssigkeit;
• Bestimmung eines Korrosionsstroms $I_{corr}$ wie folgt:

$$I_{corr} = \frac{B}{R_p}$$

• Bestimmung der Korrosionsrate $C_{rate}$ wie folgt:

$$C_{rate} = \frac{I_{corr}}{A} * K$$

wobei $A$ die Oberfläche der Arbeitselektrode ist, die der Prozessflüssigkeit ausgesetzt ist, und $K$ ein Umrechnungsfaktor ist, wobei $K$ gemäß ASTM G102-89 bestimmt wird;
wobei der Parameter $B$ wie folgt definiert ist:

$B$ liegt im Bereich von 3,0 bis 6,0 mV, wenn die Arbeitselektrode aus einem Super-Duplex-Edelstahl (austenitisch-ferritisch) hergestellt ist und in eine wässrige Lösung von Ammoniumcarbamat eingetaucht ist und kein passivierender Sauerstoff in die Lösung eingeleitet wird, oder

*B* wird anhand der folgenden Gleichung berechnet:

$$B = \frac{b_a * b_c}{2{,}3 * (b_a + b_c)}$$

wobei die Parameter $b_a$ die anodische Tafel-Steigung und $b_c$ die kathodische Tafel-Steigung sind.

8. Verfahren nach Anspruch 7, wobei die Arbeitselektrode aus einem Super-Duplex-Edelstahl besteht und der Prozessflüssigkeit ohne Zusatz von passivierendem Sauerstoff ausgesetzt ist und B im Bereich von 3,5 bis 5,0 mV und vorzugsweise 4,7 mV oder um 4,7 mV liegt.

9. Verfahren nach einem der vorhergehenden Ansprüche, wobei die Arbeitselektrode, die Referenzelektrode und die Gegenelektrode aus dem gleichen Material hergestellt sind.

10. Verfahren nach einem der vorhergehenden Ansprüche, wobei die Vorrichtung Teil einer Hochdruck-Harnstoffsyntheseanlage oder eines Harnstoffsynthese-Kreislaufs ist, insbesondere eines Harnstoffsynthese-Reaktors, eines Harnstoff-Strippers, eines Harnstoff-Kondensators oder eines Teils davon.

11. Verfahren nach einem der vorhergehenden Ansprüche, wobei die Arbeitselektrode, die Referenzelektrode und die Gegenelektrode konzentrisch auf der Sonde angeordnet sind.

12. Verfahren nach einem der vorhergehenden Ansprüche, wobei das Verfahren kontinuierlich durchgeführt wird.

**Revendications**

1. Procédé pour la détermination du taux de corrosion d'une pièce d'équipement d'une installation de synthèse d'urée, ladite pièce d'équipement étant en contact avec un fluide de traitement de ladite installation de synthèse d'urée, qui est une solution aqueuse contenant du carbamate d'ammonium, dans lequel le procédé comporte la fourniture d'électrodes immergées dans ledit fluide de traitement, lesdites électrodes incluant au moins une électrode de travail qui est constituée du même matériau que ladite pièce d'équipement, une électrode de référence et une contre-électrode, le procédé comportant les étapes de :

a) la détermination de données de polarisation de l'électrode de travail, en faisant varier le potentiel électrochimique de ladite électrode de travail par rapport à l'électrode de référence, et

b) la détermination d'un taux de corrosion de ladite pièce d'équipement sur la base desdites données de polarisation ;

dans lequel lesdites électrodes sont mises en contact avec ledit fluide de traitement en installant lesdites électrodes dans une cuve sous pression de ladite pièce d'équipement, ou en retirant une partie dudit fluide de traitement d'une canalisation en amont ou en aval de ladite pièce d'équipement et en envoyant ladite partie dudit fluide de traitement à une sonde incluant les électrodes.

2. Procédé selon la revendication 1, dans lequel ladite étape a) inclut le fait de balayer le potentiel électrochimique de ladite électrode de travail par rapport à l'électrode de référence et de mesurer le courant passant entre l'électrode de travail et la contre-électrode.

3. Procédé selon la revendication 2, dans lequel, à l'étape a), le potentiel électrochimique de ladite électrode de travail par rapport à l'électrode de référence est balayé autour du potentiel en circuit ouvert, ledit potentiel en circuit ouvert étant la différence de potentiel entre l'électrode de travail et l'électrode de référence mesurée en l'absence d'un courant électrique circulant entre l'électrode de travail et la contre-électrode.

4. Procédé selon la revendication 3, dans lequel ledit potentiel électrochimique est balayé dans une plage entre - 20 mV et +20 mV autour dudit potentiel en circuit ouvert.

5. Procédé selon la revendication 4, dans lequel ledit potentiel électrochimique est balayé avec une vitesse d'analyse inférieure à 20 mV/min, de préférence inférieure à 10 mV/min.

6. Procédé selon l'une quelconque des revendications précédentes, dans lequel, à partir des données de polarisation, une résistance de polarisation $R_P$ est calculée comme suit :

$$R_P = \frac{\Delta E}{I}$$

dans lequel :

$\Delta E$ est la différence de potentiel imposée au niveau de l'électrode de travail calculée comme étant $\Delta E$ - E - *OCP* où E est le potentiel électrochimique de l'électrode de travail et OCP est le potentiel en circuit ouvert ;

*I* est le courant passant entre l'électrode de travail et la contre-électrode dans ledit Δ*E*.

7. Procédé selon la revendication 6, dans lequel l'étape b) inclut les étapes suivantes :

• la détermination d'un paramètre *B* sur la base du matériau de l'électrode de travail et de la composition du fluide de traitement ;
• la détermination d'un courant de corrosion $I_{corr}$ comme suit :

$$I_{corr} = \frac{B}{R_p}$$

• la détermination du taux de corrosion $C_{rate}$ comme suit :

$$C_{rate} = \frac{I_{corr}}{A} * K$$

dans lequel *A* est l'aire surfacique de l'électrode de travail exposée au fluide de traitement et *K* est un facteur de conversion, dans lequel K est déterminé conformément à la norme ASTM G102-89 ;
dans lequel ledit paramètre B est défini comme suit :

B est dans la plage de 3,0 à 6,0 mV lorsque l'électrode de travail est constituée d'un acier inoxydable super duplex (austénitique-ferritique) et lorsqu'elle est immergée dans une solution aqueuse de carbamate d'ammonium et que de l'oxygène passivant n'est pas injecté dans la solution, ou
B est calculé à partir de l'équation suivante :

$$B = \frac{b_a * b_c}{2,3 * (b_a + b_c)}$$

où le paramètre $b_a$ est la pente anodique de Tafel et $b_c$ est la pente cathodique de Tafel.

8. Procédé selon la revendication 7, dans lequel l'électrode de travail est constituée d'un acier inoxydable super duplex et est exposée au fluide de traitement auquel de l'oxygène passivant n'est pas ajouté, et B est dans la plage de 3,5 à 5,0 mV et vaut de préférence 4,7 mV ou environ 4,7 mV.

9. Procédé selon l'une quelconque des revendications précédentes, dans lequel l'électrode de travail, l'électrode de référence et la contre-électrode sont constituées du même matériau.

10. Procédé selon l'une quelconque des revendications précédentes, dans lequel ladite pièce d'équipement fait partie d'une section de synthèse d'urée à haute pression ou d'une boucle de synthèse d'urée, en particulier d'un réacteur de synthèse d'urée, d'un extracteur d'urée, un condenseur d'urée ou une pièce de ceux-ci.

11. Procédé selon l'une quelconque des revendications précédentes, dans lequel ladite électrode de travail, ladite électrode de référence et ladite contre-électrode sont agencées de manière concentrique sur ladite sonde.

12. Procédé selon l'une quelconque des revendications précédentes, dans lequel le procédé est réalisé en continu.

**EP 4 416 485 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016075642 A1